(19) **Europäisches Patentamt / European Patent Office / Office européen des brevets**

(11) **EP 2 991 932 B1**

(12) **FASCICULE DE BREVET EUROPEEN**

(45) Date de publication et mention
de la délivrance du brevet:
**29.03.2017 Bulletin 2017/13**

(51) Int Cl.:
*C01G 43/00* *(2006.01)*   *G21C 3/62* *(2006.01)*

(21) Numéro de dépôt: **14722782.1**

(22) Date de dépôt: **24.04.2014**

(86) Numéro de dépôt international:
**PCT/IB2014/060971**

(87) Numéro de publication internationale:
**WO 2014/177980 (06.11.2014 Gazette 2014/45)**

(54) **NOUVEAU MATERIAU A BASE D'URANIUM, DE GADOLINIUM ET D'OXYGENE ET SON UTILISATION COMME POISON NEUTRONIQUE CONSOMMABLE**

NEUARTIGES MATERIAL AUS URAN, GADOLINIUM UND SAUERSTOFF SOWIE VERWENDUNG DAVON ALS VERBRAUCHBARES NEUTRONENGIFT

NOVEL MATERIAL MADE OF URANIUM, GADOLINIUM AND OXYGEN AND USE THEREOF AS A CONSUMABLE NEUTRON POISON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2013 FR 1353910**

(43) Date de publication de la demande:
**09.03.2016 Bulletin 2016/10**

(73) Titulaire: **Commissariat à l'Energie Atomique et aux Energies Alternatives
75015 Paris (FR)**

(72) Inventeurs:
• **PIECK, Dario**
  **92250 La Garenne-Colombes (FR)**

• **DESGRANGES, Lionel**
  **F-84120 Pertuis (FR)**
• **MATHERON, Pierre**
  **04100 Manosque (FR)**
• **PONTILLON, Yves**
  **F-04860 Pierrevert (FR)**

(74) Mandataire: **Nony**
  **11 rue Saint-Georges**
  **75009 Paris (FR)**

(56) Documents cités:
  **EP-A1- 0 026 389   FR-A1- 2 536 571**
  **FR-A5- 2 104 136**

**Description**

La présente invention se rapporte à un nouveau matériau à base d'uranium, de gadolinium et d'oxygène, présentant une phase cristalline enrichie en gadolinium.

Un tel matériau est particulièrement avantageux dans le cadre de sa mise en oeuvre comme poison neutronique consommable dans un élément combustible nucléaire, utilisé par exemple dans des réacteurs nucléaires à eau légère.

Comme dans tout type d'industrie, la production de nucléo-électricité doit répondre aux réalités économiques. Pour des centrales nucléaires sans recharge de combustible en ligne, comme c'est le cas des réacteurs nucléaires à eau légère (REL), comme par exemple des réacteurs à eau pressurisée (REP), la réduction des coûts de production passe par un allongement des campagnes de fonctionnement du réacteur. Ainsi, l'effet économiquement pénalisant des arrêts pour rechargement de combustible et du temps pour l'entretien des centrales peut être limité.

L'allongement de la durée de fonctionnement, autrement dit la mise en oeuvre de cycles longs, nécessite cependant une réserve de réactivité supplémentaire du combustible, c'est-à-dire un accroissement de l'enrichissement du combustible initial. Toutefois, il est impératif de pouvoir compenser cette augmentation de la réactivité du combustible par un excès d'anti-réactivité en début du cycle.

Actuellement, ce besoin accru d'anti-réactivité, notamment dans les réacteurs à eau pressurisé, est assuré essentiellement par la présence de bore sous forme d'acide borique, dissous à concentrations variables dans le réfrigérant ou modérateur du circuit primaire. Le bore agit comme poison pour les neutrons. La distribution homogène du bore dans le coeur présente l'avantage de ne pas perturber la distribution de puissance du réacteur nucléaire.

En revanche, l'augmentation de la teneur en bore solubilisé dans le circuit primaire est susceptible de générer certains problèmes, notamment en termes de dégradation du coefficient de réactivité du modérateur, de corrosion et de sûreté de l'installation, comme exposés dans le document FR 2 789 404, et d'augmentation de la production de tritium.

De fait, le bore solubilisé est susceptible de se dilater lors d'une augmentation de température en induisant ainsi une contribution positive au coefficient de réactivité du réacteur ($\alpha_m$). La quantité de bore dissous doit donc être impérativement maintenue en dessous d'une limite maximale, pour respecter le critère d'un coefficient de réactivité du modérateur négatif ($\alpha_m < 0$) dans toutes les conditions de fonctionnement du réacteur.

Par ailleurs, l'introduction de quantités supplémentaires d'acide borique $H_3BO_3$ peut induire des problèmes de corrosion directe, mais également, comme expliqué dans le document FR 2 789 404, de corrosion indirecte induite par exemple par le lithium, introduit comme agent de contrôle de pH pour compenser la quantité d'acide borique.

D'autre part, le risque de dilution intempestive du bore est considéré comme l'un des initiateurs principaux de l'accident de type insertion de réactivité ou « RIA » lors des études de sûreté des réacteurs.

Enfin, les réactions d'activation neutronique sur le bore constituent la source principale de production, dans le circuit primaire, de tritium ($B^{10} + n \rightarrow H_3 + 2He^4$), élément radionucléide indésirable, et dont on cherche à réduire les rejets dans l'environnement pour des raisons de sûreté et de radioprotection.

Par conséquent, en vue de réduire la quantité de bore nécessaire au contrôle de la réactivité, notamment en début de cycle, divers poisons consommables, autres que le bore soluble, ou utilisés en conjonction avec celui-ci, ont été envisagés.

Par « poison neutronique », on entend un élément doté d'un pouvoir élevé de capture des neutrons et utilisé pour compenser, du moins en partie, l'excédent de réactivité des milieux fissiles. On parle de poison neutronique « consommable », encore appelé « absorbant ou capturant neutronique temporaire », pour désigner un poison qui disparaît progressivement au cours du fonctionnement du réacteur nucléaire. Ces poisons sont généralement à base de gadolinium, d'erbium, de samarium, d'europium ou autre isotope qui, suite à une capture neutronique, produit un isotope de faible section efficace d'absorption.

Parmi les poisons consommables, le gadolinium à l'état solide est le plus employé. De manière avantageuse, la densité du gadolinium ne variant que très faiblement avec la température, il n'induit pas de contribution positive au coefficient de réactivité du modérateur $\alpha_m$. Des 25 isotopes connus du gadolinium (du $^{142}$Gd au $^{164}$Gd), seul sept sont stables. Parmi eux, les plus absorbants sont le $^{155}$Gd et le $^{157}$Gd, ces deux isotopes représentent presque 100 % de l'absorption liée au gadolinium naturel. Suite à la capture neutronique, les isotopes 155 et 157 du gadolinium se transmutent en isotopes 156 et 158 respectivement, ces deux isotopes étant en revanche de très faibles sections efficaces. Cette propriété fait du gadolinium un poison consommable de choix.

En revanche, à la différence du bore, la concentration en gadolinium à l'état solide dans le combustible ne peut pas être contrôlée par un système externe. Le gadolinium s'amenuise et disparaît avec la consommation du combustible.

A ce jour, le gadolinium est généralement utilisé sous forme d'oxyde, $Gd_2O_3$, mélangé en proportion adéquate avec de l'oxyde d'uranium $UO_2$, ou un mélange de matériaux fissiles, pour former des pastilles de combustible d'un certain nombre de crayons dans un assemblage combustible nucléaire.

On distingue deux grandes formes d'inclusion du gadolinium dans les céramiques nucléaires : les inclusions homogènes et les inclusions hétérogènes.

Dans le cadre des inclusions homogènes, il peut notamment être fait mention des pastilles homogènes constituées d'une solution solide de $(U,Gd)O_2$. Toutefois, les teneurs en $Gd_2O_3$ de ces pastilles n'excèdent pas 20 % en poids, pour rester dans le domaine de la solution solide FCC (cubique à faces centrées) du système $UO_2$-$Gd_2O_3$. A titre d'exemple, le document FR2 536 571 décrit l'utilisation, dans des pastilles d'oxyde d'uranium, d'oxyde de gadolinium $Gd_2O_3$ comme absorbant neutronique, dans un pourcentage pondéral inférieur à 12 %. Les solutions solides du système $UO_2$-$Gd_2O_3$ montrent toutefois une diminution importante de la conductivité thermique par rapport à l'$UO_2$, ce qui oblige à diminuer la génération de puissance en réduisant l'enrichissement d'$^{235}$U et par conséquent, augmente la pénalité sur la génération d'énergie durant le cycle du combustible.

En ce qui concerne les formes d'inclusions hétérogènes, le gadolinium peut être distribué dans les pastilles de combustible nucléaire, sous forme de macro-masses, ou encore y être présent selon une distribution radiale spécifique.

Une distribution du type macro-masses de $Gd_2O_3$, telle qu'envisagée par Balestrieri [1], présente l'avantage d'une conductivité thermique plus élevée que celle obtenue avec une solution solide $UO_2$-$Gd_2O_3$ mentionnée ci-dessus. Toutefois l'oxyde de gadolinium $Gd_2O_3$ est susceptible de poser des problèmes d'incompatibilité avec l'$UO_2$ (notamment en termes de dilatation anisotropique) et de solubilité dans l'eau (en conditions typiques d'opération d'un réacteur à eau pressurisée par exemple), ce qui entrave son utilisation dans des pastilles d'$UO_2$.

Par ailleurs, plusieurs variantes de distribution radiale de gadolinium dans des pastilles de combustible, en association ou non avec d'autres poisons consommables, ont déjà été proposées.

Ainsi, le document US 4,671,927 décrit l'utilisation, dans des pastilles pour crayon de combustible nucléaire, d'un mélange hybride de $Gd_2O_3$ (de 1 à 20 % en poids) et de particules de carbure de bore.

Le document US 4,587,087 propose quant à lui des pastilles de combustible nucléaire comprenant un coeur en matériau fissile, par exemple en oxyde d'uranium, enrobé d'une première couche comprenant principalement du bore, éventuellement en association avec d'autres poisons consommables, et d'une seconde couche de matériau hydrophobe formée principalement de niobium.

Le document US 3,122,484 met en oeuvre pour sa part, une couche de cadmium, gadolinium ou samarium en surface de platines d'$UO_2$ (type MTR).

Egalement, le document US 4,668,468 propose la mise en oeuvre, dans quelques crayons de l'assemblage, de pastilles présentant un empoisonnement radial suivant différentes variantes de distribution, de manière à minimiser la quantité de poison neutronique nécessaire au contrôle de la réactivité. Il décrit plus particulièrement des pastilles comportant, soit au niveau de leur zone intérieure, soit au niveau de leur zone extérieure, un mélange homogène de gadolinium et d'uranium enrichi. De même, dans le document US 4,678,629, sont proposées des pastilles présentant une partie intérieure cylindrique comprenant de 4 à 8 % en poids de $Gd_2O_3$ mélangé avec de l'uranium naturel ou appauvri, et un partie extérieure annulaire formée d'$UO_2$ enrichi en $^{235}$U.

Finalement, l'ensemble des variantes de mise en oeuvre présentées dans ces documents utilisent du $Gd_2O_3$ sans combinaison chimique avec l'$UO_2$ (macro-masses de $Gd_2O_3$, par exemple), ou un mélange d'$UO_2$ et de $Gd_2O_3$ dans lequel l'oxyde de gadolinium $Gd_2O_3$ n'excède pas 20 % en poids du mélange.

Ces formes d'inclusion deviennent des matériaux connus du diagramme de phase U-Gd-O : $UO_2$, solutions solides $(U,Gd)O_2$ et $Gd_2O_3$.

Il existe bien une autre phase répertoriée dans la littérature [2][3] du système U-Gd-O, enrichie en gadolinium. Cette phase $Gd_6UO_{12}$, plus connue sous l'appellation phase « Delta », est de structure cristallographique du type rhomboédrique et appartient au groupe de symétrie R3 (elle peut également être indexée dans une structure hexagonale). Deux types de méthodes d'obtention de la phase $Gd_6UO_{12}$ à l'échelle du laboratoire sont reportées dans la littérature : à partir de poudres co-broyées d'$UO_2$ et de $Gd_2O_3$ [2], ou à partir d'$U_3O_8$ [3].

Malheureusement, la phase Delta s'avère instable dans des conditions de frittage à haute température, typiquement mises en oeuvre pour l'élaboration des pastilles d'$UO_2$. Il n'est donc pas possible d'envisager sa mise en oeuvre comme poison consommable de pastilles de combustible nucléaire.

Actuellement, une hausse de l'enrichissement des combustibles est envisagée par les principaux concepteurs/constructeurs/exploitants de réacteurs nucléaires ainsi que la limitation/réduction de l'utilisation de bore. En conséquence, en vue de cette augmentation de l'enrichissement et des problématiques décrites ci-dessus des techniques actuelles d'apport d'antiréactivité, il demeure un besoin d'optimiser l'empoisonnement des céramiques d'$UO_2$ des assemblages nucléaires avec du gadolinium, de manière à permettre un contrôle de la réactivité en conditions normales d'exploitation d'un réacteur nucléaire, en réduisant, voire en supprimant, l'utilisation du bore dans le réacteur.

La présente invention vise précisément à proposer un nouveau matériau U-O-Gd présentant une phase cristalline enrichie en gadolinium et compatible avec sa mise en oeuvre comme poison neutronique consommable d'un élément combustible nucléaire, par exemple pour des pastilles.

Ainsi, la présente invention concerne, selon un premier de ses aspects, un matériau à base d'uranium (U), de gadolinium (Gd) et d'oxygène (O) présentant une phase cristalline de structure cristallographique de type cubique, avec un rapport atomique Gd/[Gd+U] allant de 0,6 à 0,93, l'uranium y étant présent au degré d'oxydation +IV et/ou +V.

De manière surprenante, les inventeurs ont découvert qu'il est possible d'accéder à un matériau U-O-Gd présentant une phase cristalline riche en gadolinium et stable dans les conditions de frittage d'une pastille de combustible.

Comme détaillé dans la suite du texte, les inventeurs ont plus particulièrement mis en évidence deux phases cristallines différentes, qui seront appelées dans la suite du texte, « phase C1 » et « phase C2 », ainsi qu'un domaine biphasé, mélange de ces deux phases cristallines.

Le matériau selon l'invention peut être avantageusement utilisé comme poison neutronique consommable d'un élément combustible nucléaire.

De fait, comme détaillé dans la suite du texte, il est produit dans les mêmes conditions de frittage que l'oxyde d'uranium ; il est co-frittable avec l'$UO_2$, ce qui autorise son utilisation dans des pastilles de combustible nucléaire.

Ainsi, selon un autre de ses aspects, la présente invention vise l'utilisation d'un matériau tel que défini précédemment, comme poison neutronique consommable d'un élément combustible nucléaire, par exemple pour un réacteur nucléaire à eau légère ou à eau lourde.

Le matériau selon l'invention peut être ainsi mis en oeuvre dans des pastilles utilisées pour des crayons d'assemblage de combustible nucléaire, ou encore dans des combustibles nucléaires de type plaques.

Comme illustré dans les exemples qui suivent, il s'avère possible, en ajustant le nombre de crayons selon l'invention, la proportion de poison consommable selon l'invention des pastilles les constituant, et/ou le vecteur isotopique du gadolinium, de concevoir des assemblages de combustible nucléaire permettant d'approcher le comportement d'un réacteur « idéal », autrement dit de manoeuvrer de manière optimale le réacteur.

En particulier, l'évolution de la réactivité du réacteur peut être mieux contrôlée avec la mise en oeuvre de pastilles conformes à l'invention, qu'avec des pastilles homogènes classiques constituées d'une solution solide de $(U,Gd)O_2$.

Par ailleurs, de manière avantageuse, la mise en oeuvre du matériau selon l'invention permet de réduire, voire de s'affranchir totalement de l'usage d'autres poisons absorbants/neutroniques. En particulier, elle permet de réduire, voire supprimer totalement l'usage de bore dissous dans le circuit primaire de réfrigération du réacteur et/ou dissous dans le modérateur. L'utilisation du matériau selon l'invention comme poison neutronique consommable permet ainsi de palier les inconvénients, discutés précédemment, induits par le recours à des quantités importantes de bore, notamment de réduire les problèmes de corrosion, de production de tritium et de risque d'accident de réactivité.

D'autres caractéristiques, avantages et modes d'application du matériau selon l'invention, ressortiront mieux à la lecture de la description détaillée qui va suivre, des exemples de réalisation de l'invention et à l'examen des dessins annexés.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

## MATERIAU DE L'INVENTION

Comme évoqué précédemment, le matériau à base d'uranium (U), de gadolinium (Gd) et d'oxygène (O) selon l'invention est caractérisé par une phase cristalline de structure cristallographique de type cubique, avec un rapport atomique Gd/[Gd+U] allant de 0,6 à 0,93, l'uranium y étant présent au degré d'oxydation +IV et/ou +V.

Selon une première variante de réalisation, le matériau selon l'invention présente une phase cristalline, dénommée par la suite phase « cubique 1 » ou « C1 », dont le rapport atomique Gd/[Gd+U] est compris entre 0,79 et 0,93.

Cette phase C1 présente plus particulièrement une structure cristallographique de type cubique de paramètre de maille ($a_1$), proche de celui du c-$Gd_2O_3$ (paramètre de maille d'environ 10,83 Å), compris entre 10,8 et 10,9 Å.

Selon une seconde variante de réalisation, le matériau selon l'invention présente une phase cristalline, dénommée par la suite phase « cubique 2 » ou « C2 », dont le rapport atomique Gd/[Gd+U] est compris entre 0,6 et 0,71.

Cette phase C2 présente plus particulièrement une structure cristallographique de type cubique de paramètre de maille ($a_2$), proche de celui de l'$UO_2$ (paramètre de maille d'environ 5,47 Å), compris entre 5,3 et 5,5 Å.

Selon encore une autre variante de réalisation, le matériau selon l'invention est de type biphasé, présentant à la fois une phase cubique 1 et une phase cubique 2 telles que définies précédemment.

Autrement dit, le matériau selon cette troisième variante, présente une phase cristalline avec un rapport atomique Gd/[Gd+U] global strictement supérieur à 0,71 et strictement inférieur à 0,79.

L'uranium présent dans un matériau de l'invention, selon l'une ou l'autre des variantes précitées, peut être de l'uranium naturel (mélange d'$^{234}U$, $^{235}U$ et $^{238}U$).

Selon un autre mode de réalisation particulier, il peut s'agir d'uranium dont la composition isotopique naturelle est modifiée, en particulier de l'uranium isotopiquement enrichi en $^{235}U$ ou de l'uranium isotopiquement appauvri en $^{235}U$.

De même, le gadolinium présent dans un matériau selon l'invention peut être du gadolinium naturel (mélange de $^{152}Gd$/$^{154}Gd$/$^{155}Gd$/$^{156}Gd$/$^{157}Gd$/$^{158}Gd$/$^{160}Gd$).

Selon un autre mode de réalisation particulier, il peut s'agir de gadolinium dont la composition isotopique naturelle est modifiée dans son rapport $^{155}Gd/Gd_{total}$ et/ou dans son rapport $^{157}Gd/Gd_{total}$, en particulier avec une teneur

en $^{155}$Gd et/ou $^{157}$Gd accrue comparativement au gadolinium naturel.

A titre d'exemple, le gadolinium du matériau selon l'invention peut présenter les vecteurs isotopiques suivants : 100 % $^{155}$Gd ; 50 % $^{155}$Gd + 50 % $^{157}$Gd.

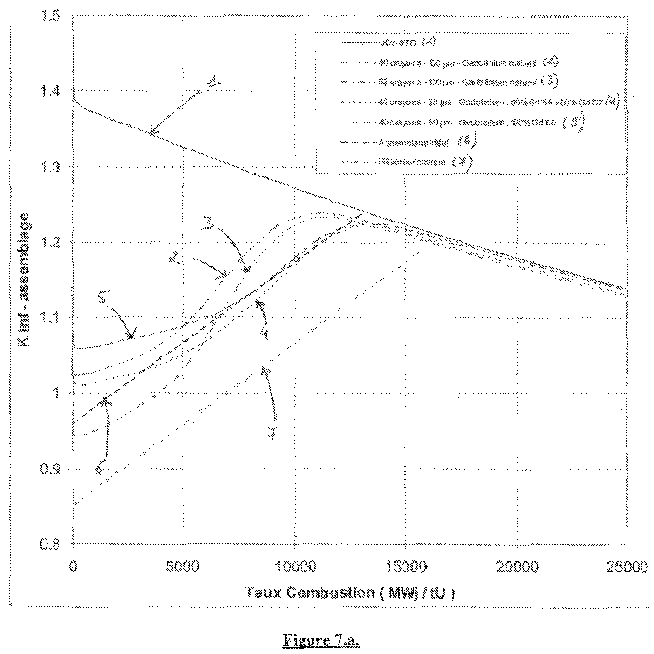

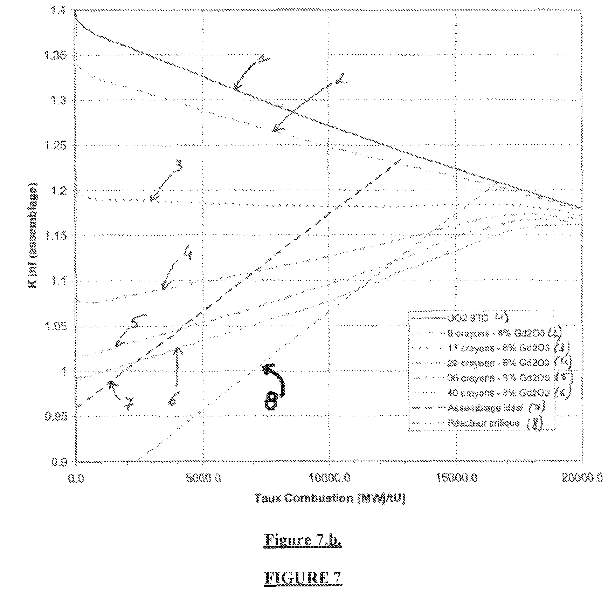

Comme illustré dans l'exemple 4 qui suit et en figures 7.a. et 8, il est possible, en faisant varier le vecteur isotopique en gadolinium, plus précisément les ratios isotopiques $^{155}$Gd/Gd$_{total}$ et/ou $^{157}$Gd/Gd$_{total}$, d'obtenir une cinétique d'épuisement du gadolinium maîtrisée.

*Préparation du matériau selon l'invention*

Selon un autre de ses aspects, la présente invention concerne un procédé de préparation d'un matériau tel que défini précédemment, comprenant une étape de frittage à une température allant de 1 200 à 2 200 °C et sous atmosphère réductrice, d'une poudre formée d'un mélange d'oxyde d'uranium et d'oxyde de gadolinium (Gd$_2$O$_3$), dans des proportions telles que le gadolinium est présent dans la poudre finale dans un rapport atomique Gd/[Gd+U] allant de 0,6 à 0,93.

L'oxyde d'uranium peut être plus particulièrement du dioxyde d'uranium (UO$_2$) ou un oxyde supérieur tel que U$_3$O$_8$ (octaoxyde de triuranium).

Selon un mode de réalisation particulier, la poudre est formée par mélange d'une première poudre de dioxyde d'uranium UO$_2$ et d'une seconde poudre d'oxyde de gadolinium Gd$_2$O$_3$, dans un rapport pondéral Gd$_2$O$_3$/(UO$_2$ + Gd$_2$O$_3$) supérieur ou égal à 40 % en poids.

Bien entendu, il appartient à l'homme du métier d'adapter les proportions mises en oeuvre en oxyde d'uranium et en oxyde de gadolinium, pour obtenir la proportion souhaitée en gadolinium dans la poudre finale.

L'étape de frittage peut être opérée sur la poudre, préalablement à sa mise en oeuvre dans un élément combustible nucléaire, par exemple pour une pastille.

Alternativement, cette étape de frittage peut être effectuée au cours de l'élaboration de l'élément combustible nucléaire. En particulier, dans le cas de l'élaboration d'une pastille selon l'invention, comme détaillé dans la suite du texte, le frittage peut être opéré au niveau de la poudre déposée sous la forme d'une barbotine à la surface d'une pastille comprenant au moins une matière fissile, voire fertile (pastille crue simplement pressée par compaction, ou pré-frittée), par frittage global de la pastille. Le matériau de l'invention est alors formé directement sur la pastille, à l'issue du frittage.

L'étape de frittage sous atmosphère réductrice peut être effectuée par toute technique connue de l'homme du métier.

Elle peut être opérée par chauffage de la poudre à une température allant de 1 200 à 2 200°C, en particulier de 1 600 à 1 800°C.

Par « atmosphère réductrice », on entend une atmosphère présentant un potentiel d'oxygène, pO$_2$, inférieur à -300 kJ/mol, en particulier comprise entre - 550 kJ/mol et -300 kJ/mol pendant le frittage.

L'atmosphère réductrice peut être plus particulièrement une atmosphère incorporant de l'hydrogène, par exemple une atmosphère d'argon (avec potentiellement quelques ppm d'impureté d'O$_2$) additionnée à 5 % molaire d'hydrogène.

D'une manière générale, la durée du frittage peut être supérieure ou égale à 1 heure, en particulier allant de 3 à 8 heures.

## APPLICATIONS DU MATERIAU COMME POISON CONSOMMABLE

Comme indiqué précisément, le matériau selon l'invention trouve une application particulièrement avantageuse en tant que poison neutronique consommable d'un élément combustible nucléaire.

Il peut être par exemple utilisé pour contrôler la réactivité dans le cadre du fonctionnement de réacteurs nucléaires à eau légère (REL), par exemple pour des réacteurs à eau pressurisée ou des réacteurs à eau bouillante, ou encore pour des réacteurs à eau lourde (protoxyde de deutérium D$_2$O).

D'une manière générale, on entend par « réacteur nucléaire », le sens usuel du terme à ce jour, à savoir des centrales de production d'énergie à partir des réactions de fission nucléaires utilisant des éléments combustibles dans lesquels se produisent les fissions qui libèrent la puissance calorifique, cette dernière étant extraite des éléments par échange thermique avec un fluide caloporteur qui assure leur refroidissement.

Le matériau peut être ainsi mis en oeuvre dans des éléments combustibles nucléaires, classiquement rencontrés dans les installations nucléaires, de type crayons formés d'une pluralité de pastilles empilées les unes sur les autres, ou encore de type plaques, comme décrit plus précisément dans la suite du texte.

Bien entendu, l'invention n'est nullement limitée aux variantes spécifiques de réalisation décrites ci-dessous.

**Pastille de combustible nucléaire**

La présente invention se rapporte, selon un autre de ses aspects, à une pastille de combustible nucléaire comprenant un matériau tel que défini précédemment.

Comme évoqué précédemment, les pastilles désignent des éléments combustible en céramique de forme cylindrique, et dont l'empilement dans un tube de gainage constitue un crayon d'un assemblage nucléaire.

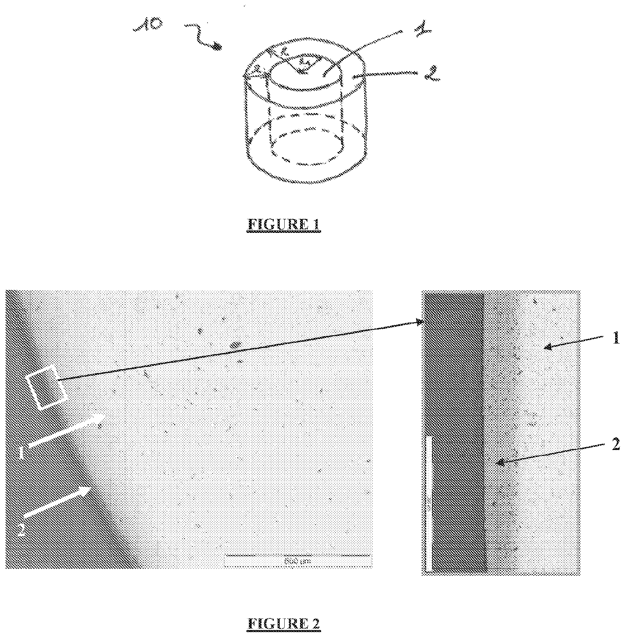

Selon un mode de réalisation particulièrement préféré, une pastille selon l'invention est une pastille hétérogène, comme représenté en figure 1, formée d'au moins une partie intérieure, en particulier cylindrique (1), comprenant au moins une matière fissile, voire fertile ; et enrobée d'une partie extérieure annulaire (2) formée en tout ou partie d'un matériau selon l'invention.

De préférence, la pastille de l'invention est de forme cylindrique, à l'instar des pastilles classiquement rencontrées dans les crayons de combustible nucléaire. D'autres formes peuvent bien entendu être envisagées, par exemple une forme globalement elliptique, comme décrit dans la demande FR 2 953 637.

Une pastille de l'invention peut présenter les dimensions de pastilles conventionnelles. Par exemple, elle peut être de rayon compris entre 3,8 mm et 4,4 mm (en exemple : 4,05 à 4,25 mm) ; et de hauteur comprise entre 3 et 20 mm, typiquement entre 12 et 16 mm.

Selon un mode de réalisation particulier, la partie extérieure annulaire (2) présente une épaisseur (e) allant de 0,05 à 7,5 % du rayon total (R) de ladite pastille, en particulier allant de 1 à 3,5 %.

La partie extérieure annulaire peut ainsi présenter une épaisseur (e), mesurée suivant l'axe du rayon de la pastille, comprise entre 2 et 300 $\mu$m, en particulier entre 30 et 250 $\mu$m.

Comme illustré en exemple 4 et en figures 7.a. et 8, l'épaisseur de la partie extérieure annulaire (2), et donc la proportion en poison neutronique consommable selon l'invention de la pastille, peut être avantageusement ajustée pour contrôler au mieux l'évolution de la réactivité du réacteur, et approcher une évolution optimale.

Par matière « fertile », on entend une matière constituée d'atomes fertiles, autrement dit d'atomes dont le noyau peut être transformé, directement ou indirectement, en un noyau fissile, par capture de neutrons. Une matière fertile peut être par exemple l'U$^{238}$.

Par matière « fissile », on entend une matière dont les noyaux sont susceptibles de subir une fission par absorption de neutrons, comme par exemple l'U$^{235}$.

La partie intérieure cylindrique (1), encore appelée « coeur », des pastilles selon l'invention peut être formée en tout ou partie d'oxyde d'uranium ($UO_2$), d'oxyde de plutonium ($PuO_2$), d'oxyde de thorium ($ThO_2$) ou un mélange de ces matières fissiles, comme par exemple $(U, Pu)O_2$.

Selon un mode de réalisation particulier, le coeur des pastilles est formé d'oxyde d'uranium.

De même que décrit précédemment, l'uranium peut être de l'uranium naturel ou de l'uranium dont le vecteur isotopique est modifié, par exemple de l'uranium isotopiquement enrichi en U$^{235}$.

*Préparation d'une pastille conforme à l'invention*

Selon un premier mode de réalisation, une pastille hétérogène selon l'invention peut être formée par pressage des poudres.

Plus particulièrement, une pastille selon l'invention peut être moulée selon la structure représentée en figure 1, par compression d'une première poudre comprenant au moins une matière fissile et dédiée à former le coeur de la pastille, et d'une seconde poudre formée en tout ou partie d'un matériau selon l'invention et dédiée à former la partie extérieure annulaire.

La pastille ainsi moulée est ensuite frittée selon des techniques connues de l'homme du métier, sous conditions réductrices, par exemple sous atmosphère d'argon (ou d'azote) additionnée d'hydrogène.

Le frittage est plus préférentiellement opéré à une température allant de 1 200 à 2 200 °C, en particulier de 1 600 à 1 800 °C.

Ce mode de réalisation est particulièrement avantageux pour former des pastilles avec une couche annulaire extérieure d'épaisseur, suivant l'axe de rayon, d'au moins 50 $\mu$m.

Selon un autre mode de réalisation particulier, la partie extérieure annulaire (2) peut être formée par dépôt d'une barbotine à la surface d'une pastille dédiée à former le coeur de la pastille finale selon l'invention.

Ainsi, selon un autre de ses aspects, la présente invention concerne un procédé de fabrication d'une pastille hétérogène (10) de combustible nucléaire selon l'invention, comprenant au moins les étapes consistant en :

(i) disposer d'une poudre comprenant un matériau selon l'invention ; ou d'une poudre formée d'un mélange d'oxyde d'uranium tel que $UO_2$ ou un oxyde supérieur tel que $U_3O_8$, et d'oxyde de gadolinium $Gd_2O_3$, dans des proportions telles que le gadolinium est présent dans un rapport atomique Gd/[Gd+U] allant de 0,6 à 0,93 ;
(ii) faire une barbotine à partir de la poudre de l'étape (i) ;

(iii) déposer la poudre sous forme de barbotine sur la surface d'une pastille (1), comprenant au moins une matière fissile, voire fertile ; et

(iv) fritter la pastille obtenue à l'issue de l'étape (iii) sous atmosphère réductrice et à une température comprise entre 1 200 °C et 2 200 °C.

Ainsi, une pastille (10) selon l'invention peut être préparée à partir d'une poudre de matériau selon l'invention, formée préalablement à sa mise en oeuvre en étape (i) du procédé de l'invention.

Alternativement, le matériau selon l'invention peut être produit directement au niveau de la pastille, lors du frittage global en étape (iv) de la pastille sous conditions réductrices.

La barbotine en étape (ii) peut être formée, de manière classique, par mélange de la poudre de l'étape (i) avec un milieu liquide susceptible de pouvoir être éliminé facilement par chauffage ou évaporation naturelle, en particulier de l'éthanol.

La pastille (1), à la surface de laquelle est déposée la barbotine et dédiée à former le coeur de la pastille hétérogène (10) de l'invention, est de préférence une pastille pressée. Elle peut être réalisée par toute méthode conventionnelle, connue de l'homme du métier pour l'élaboration de pastilles de combustible nucléaire.

Par exemple, la pastille (1) peut être formée *via* les étapes suivantes :

- préparation de la poudre de combustible, par exemple d'oxyde d'uranium, dite étape de pastillage ;
- compactage de la poudre de combustible sous forme de pastille, par pressage à froid ou tout autre moyen, éventuellement en utilisant un lubrifiant tel que le stéarate de zinc, stéarate d'ammonium, bistéraoyléthylendiamide (composé de 76.8 % C + 13.3 % H + 5.1 % O + 4.8 % N, commercialisé par la société HOECHSCT sous le nom CERIDUST.

La pastille (1) peut être non frittée, frittée ou pré-frittée.

Le frittage peut être plus particulièrement opéré par chauffage de la pastille pressée, à haute température, notamment à une température supérieure à 1 200 °C, en particulier sous atmosphère réductrice.

On entend par pastille « pré-frittée », une pastille ayant été soumise à un traitement thermique en dessous des conditions de frittage, par exemple à une température allant de 1 000 à 1 500 °C, notamment d'environ 1 200 °C, en particulier sous atmosphère réductrice. Le pré-frittage permet avantageusement d'améliorer la cohésion de la pastille, sans atteindre une densification complète.

La barbotine obtenue à l'issue de l'étape (ii) peut être déposée à la surface de la pastille (1) de coeur, en immergeant la pastille dans la barbotine.

L'étape (iii) peut inclure le séchage de la couche de barbotine déposée en surface de la pastille, par exemple en laissant la pastille à la surface de laquelle est déposée la barbotine, à l'air libre, pendant une durée allant de 5 à 30 minutes et, éventuellement, en chauffant entre 40 et 90 °C, typiquement entre 50 et 60 °C.

Le frittage en étape (iv) peut être opéré sous atmosphère d'argon additionnée d'hydrogène, par exemple sous une atmosphère d'argon additionnée à 5 % molaire en hydrogène.

De préférence, cette étape de frittage est effectuée à une température allant de 1 200 °C à 2 200 °C, en particulier de 1 600 à 1 800 °C.

Selon un mode de réalisation particulier, cette étape de frittage est opérée pendant une durée supérieure ou égale à 1 heure, en particulier allant de 3 à 8 heures.

### Crayon et assemblage de combustible nucléaire

Les pastilles selon l'invention, telles que décrites précédemment, peuvent être mises en oeuvre dans des crayons de combustible nucléaire.

Par « crayon de combustible nucléaire », on entend désigner, de manière conventionnelle, un élément combustible tubulaire, de faible diamètre, fermé à ses deux extrémités, constituant du coeur d'un réacteur nucléaire, et contenant une matière fissile ou fertile.

Un crayon est plus particulièrement formé d'une pluralité de pastilles de combustible empilées les unes sur les autres, et d'une gaine entourant l'empilement de pastilles. Par exemple, la gaine d'un crayon prévu pour un réacteur à eau pressurisée (REP) peut être en alliage de zirconium ou en alliage M5 (ZrNbO). Plusieurs crayons forment un assemblage ; et plusieurs assemblages forment le coeur d'un réacteur nucléaire.

L'invention concerne ainsi, selon un autre de ses aspects, un crayon de combustible nucléaire comprenant des pastilles de combustible telles que définies précédemment.

Un crayon selon l'invention peut être constitué exclusivement de pastilles conformes à l'invention, identiques ou différentes.

Selon un autre mode de réalisation particulier, il peut comprendre, en plus des pastilles conformes à l'invention, d'autres pastilles non empoisonnées par le matériau de l'invention, par exemple des pastilles homogènes d'UO$_2$.

L'invention concerne encore un assemblage de combustible nucléaire, par exemple utilisé pour un réacteur à eau légère, comprenant des crayons de combustible selon l'invention, tels que définis précédemment.

Le nombre et le positionnement des crayons selon l'invention, dans un assemblage conventionnel formé d'un réseau de crayons, peuvent être ajustés de manière à conduire à un contrôle optimal du réacteur, comme illustré dans l'exemple 4 qui suit et en figures 7.a. et 8.

De préférence, les crayons enrichis en gadolinium selon l'invention sont répartis de manière régulière dans l'assemblage de combustible. Une répartition appropriée des assemblages combustibles contenant du gadolinium selon l'invention dans le coeur du réacteur nucléaire permet d'atteindre une répartition radiale plus régulière de la puissance, et ce pendant tout un cycle de fonctionnement du coeur avant rechargement.

A titre d'exemple, un assemblage classique formé d'un réseau 17x17 peut incorporer de 4 à 64 crayons selon l'invention, les autres crayons pouvant être formés de pastilles classiques non empoisonnées, par exemple des pastilles homogènes d'UO$_2$ enrichies en U$^{235}$.

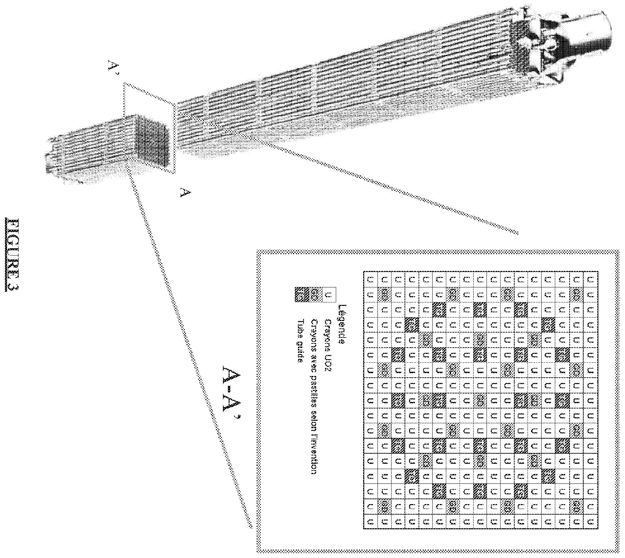

La figure 3 représente, à titre d'exemple, de manière schématique, un assemblage combustible formé d'un réseau 17x17, composé de 265 crayons de combustible dont 25 crayons (GD) formés de pastilles conformes à l'invention, les autres crayons (U) étant formés de pastilles homogènes d'UO$_2$. Les crayons combustibles sont maintenus par une structure comprenant 24 tubes-guides (TG).

Bien entendu, le matériau selon l'invention peut être mis en oeuvre comme poison neutronique consommable dans des éléments de combustible nucléaire, autres que des crayons.

Le développement qui suit décrit, à titre d'exemple, l'utilisation du matériau de l'invention dans des combustibles nucléaires de géométrie type plaques.

## Combustible nucléaire de géométrie type plaques

Selon encore une autre variante de réalisation, l'invention se rapporte à un élément combustible nucléaire de géométrie type plaques, comprenant une ou plusieurs zones fissiles, voire fertiles, revêtue(s), au moins en partie, d'un matériau selon l'invention.

Ces combustibles nucléaires de géométrie type plaques sont généralement mis en oeuvre dans des réacteurs à faible puissance.

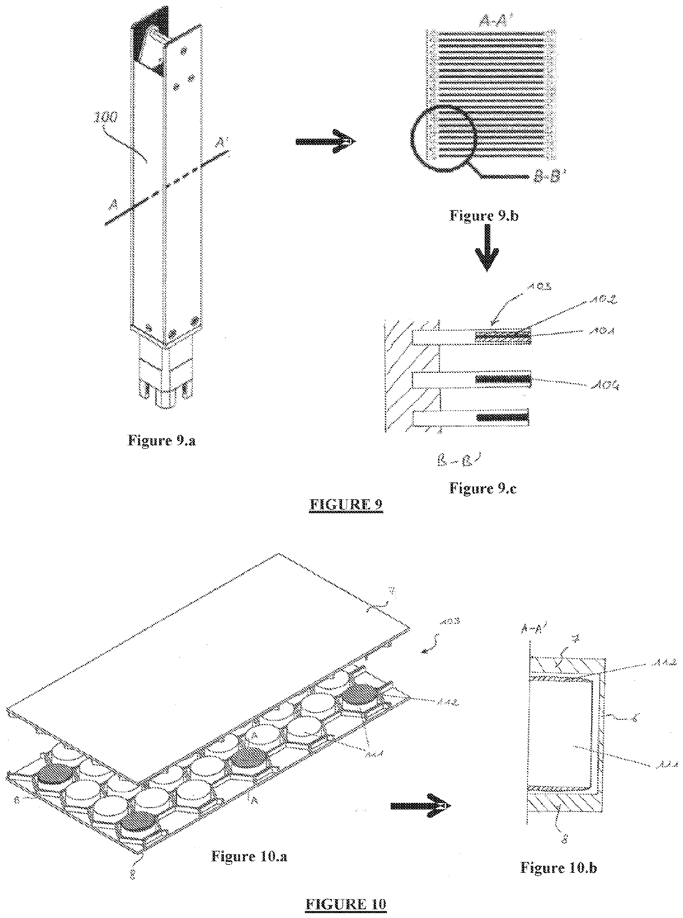

La figure 9.a représente, de manière schématique, une vue d'ensemble d'un tel assemblage de combustible nucléaire (100) comprenant un empilement de plaques gainées (figure 9.b), contenant une matière fissile. La gaine est constituée généralement d'un alliage d'aluminium.

Comme représenté en figure 9.c, l'assemblage peut comprendre une ou plusieurs plaques (103) comprenant une zone fissile (101), par exemple d'UO$_2$, revêtue au moins en partie d'une couche (102) de matériau enrichi en gadolinium selon l'invention. Les autres plaques (104) peuvent être des plaques standard non empoisonnées.

Selon une mode de réalisation particulier, comme représenté en figure 10.a, une plaque (103) peut être plus particulièrement constituée d'un réseau des pastilles (111) de combustible nucléaire, par exemple des pastilles d'UO$_2$, localisées dans un réseau d'alvéoles (6), intercalé entre deux plaques (7,8). Une telle structure d'élément combustible de type plaque est décrite plus en détails dans le document FR 2 889 765.

Dans le cadre de cette variante de réalisation, quelques pastilles, voire la totalité des pastilles (111) incorporées dans l'élément combustible de type plaque peuvent être revêtues, au moins en partie, d'une couche (112) formée d'un matériau selon l'invention, comme visualisé, en vue de coupe, sur la figure 10.b.

L'invention va maintenant être décrite au moyen des exemples et figures suivants, donnés à titre illustratif et non limitatif de l'invention.

## FIGURES

Figure 1 : Représentation schématique d'une pastille hétérogène selon un mode particulier de l'invention. A des fins de clarté, les différents éléments sur la figure 1 sont représentés en échelle libre, les dimensions réelles des différentes parties n'étant pas respectées.

Figure 2 : Clichés obtenus au microscope optique de l'observation en coupe d'une pastille hétérogène présentant un coeur fissile (1) d'UO$_2$, enrobé d'une couche périphérique (2) riche en gadolinium de phase C1, obtenue selon l'exemple 4 ;

Figure 3 : Représentation schématique d'une section d'assemblage modélisé 17x17 crayons, intégrant 52 crayons (notés « GD ») formés de pastilles conformes à l'invention ; les crayons désignés « U » étant constitués de pastilles homogènes d'UO$_2$ enrichies à 4,9 % en U$^{235}$ , et « TG » désignant des tubes guides. L'image de gauche est simplement un exemple illustratif d'un tel assemblage.

Figure 4 : Evolution du facteur de multiplication infini ($K_{inf}$) d'un réacteur en fonction du taux de combustion moyen (modélisation à l'aide du code de calcul APOLLO2), pour :

- un réacteur fictif avec un assemblage constitué de pastilles homogènes d'$UO_2$ enrichies à 4,9 % en $U^{235}$ (courbe 1) ;
- un réacteur dit « critique » tel que défini en exemple 4.i., pour lequel $K_{réel}$=1,00 (courbe 7) ;
- un réacteur dit « idéal » tel que défini en exemple 4.i., pour lequel la réactivité réelle, $\rho_{réel}$, est de +2 000 pcm (courbe 2), jusqu'à atteindre la fin du cycle (comprise entre les points de fonctionnement (3) et (4)) ;
- un réacteur fictif avec un assemblage constitué de pastilles homogènes d'$UO_2$ enrichies à 4,9 % en $U^{235}$, et en prenant en compte l'effet d'une concentration de 2 000 pcm de bore dissous dans le caloporteur (courbe 5).

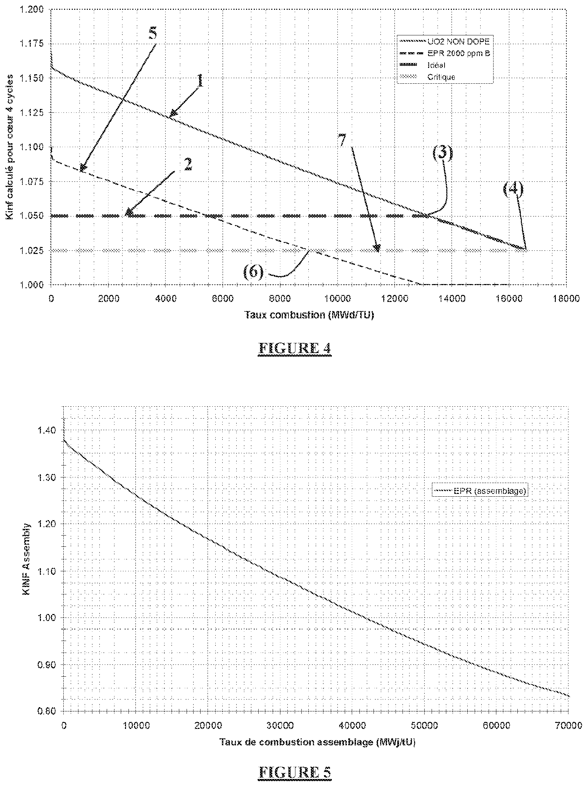

Figure 5 : Evolution du facteur de multiplication $K_{inf}$ d'un assemblage fictif 17x17 en fonction du taux de combustible moyen pour un assemblage constitué de pastilles homogènes d'$UO_2$ enrichies à 4,9 % en $U^{235}$ (modélisation à l'aide du code de calcul APOLLO2) ;

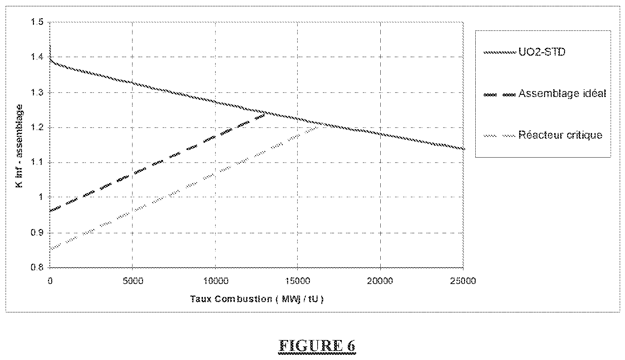

Figure 6 : Evolution du facteur de multiplication $K_{inf}$ d'un assemblage d'$UO_2$ standard à 4,9 % $U^{235}$ , d'un assemblage « idéal » et d'un assemblage « critique » tel que définis dans l'exemple 4 ;

Figure 7 : Evolution du facteur de multiplication $K_{inf}$ d'assemblages fictifs en fonction du taux de combustible moyen (modélisation à l'aide du code de calcul APOLLO2) pour :

figure 7.a : différents assemblages employant 40 ou 52 crayons formés de pastilles hétérogènes conformes à l'invention et dont l'enrobage annulaire présente une épaisseur de 50, 60 ou 150 $\mu$m, et différents vecteurs isotopiques de Gd ; et

figure 7.b : différents assemblages employant de 8 à 40 crayons formés de pastilles homogènes constituées d'une solution solide de $Gd_2O_3$, $UO_2$, à 8 % en poids de $Gd_2O_3$ ;

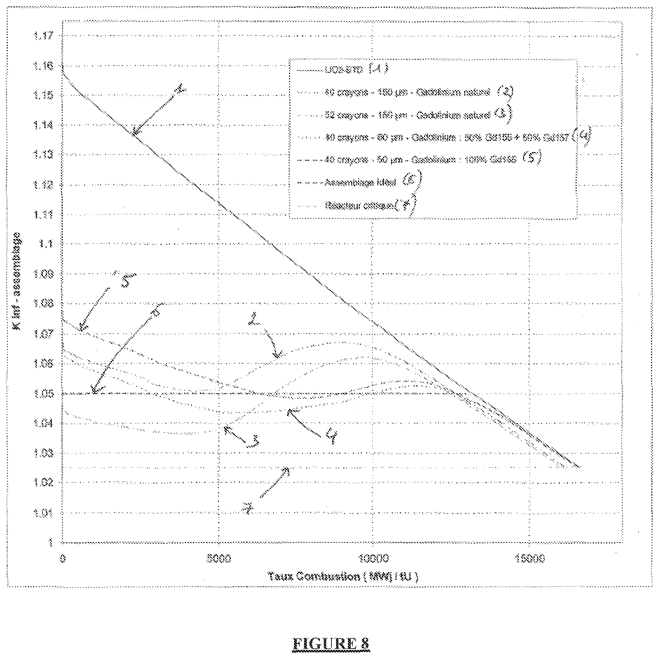

Figure 8 : Evolution du facteur de multiplication infini d'un réacteur fictif employant une gestion par quart et les assemblages illustrés en figure 7.a et comparaison (modélisation à l'aide du code de calcul APOLLO2) ;

Figure 9 : Représentation schématique d'un assemblage de combustible de type plaques (figure 9.a), et vues suivant différentes coupes (figures 9.b et 9.c), les plaques pouvant être légèrement courbées, et le nombre de plaques n'étant qu'un exemple ;

Figure 10 : Représentation schématique d'un élément combustible nucléaire de type plaque (figure 10.a), et vue en coupe (figure 10.b).

## EXEMPLES

## EXEMPLE 1

### *Préparation d'un matériau selon l'invention*

Différentes poudres mixtes formées d'un mélange d'$UO_2$ et de $Gd_2O_3$ avec une teneur massique en $Gd_2O_3$ variant de 50 % à 90 % (par exemple : 55 %, 65 %, 69 %, 80 %, 82,4 %) sont compactées puis frittées sous atmosphère réductive d'Ar, $H_2$ 5 % à 1 700 °C, pendant 4 heures pour donner des pastilles denses.

Les résultats des analyses des pastilles ainsi obtenues par diffraction de R-X, MEB et analyse dispersive en énergie (EDS) sont présentés dans le tableau 1 ci-dessous.

Des phases cristallines de structure cristallographique de type cubique sont détectées dans les pastilles ainsi obtenues, et plus particulièrement :

- une structure cristallographique de type cubique de paramètre de maille d'environ 5,43 Å, intitulée phase cubique 2 (C2), pour un ratio atomique Gd/[Gd+U] compris entre 0,5 et 0,71 ;
- une structure cristallographique de type cubique de paramètre de maille d'environ 10,8 Å, intitulée phase cubique 1 (C1), pour un ratio atomique Gd/[Gd+U] compris entre 0,79 et 0,93 ; et
- une zone de démixtion de ces deux phases pour un ratio atomique Gd/[Gd+U] compris entre 0,71 et 0,79.

TABLEAU 1

| Poudres | 1 | 2 | 3 | 4 | 5 |
|---|---|---|---|---|---|
| Teneur massique (%) de la poudre initiale $Gd_2O_3$/ ($Gd_2O_3 + UO_2$) | 55 | 65 | 69 | 80 | 82,4 |
| Z (ratio atomique Gd/(Gd+ U)) de la poudre initiale. | 0,66 | 0,74 | 0,75 | 0,85 | 0,87 |
| Structure cristallographique | Cubique C2 | Cubique C2 et C1 biphasé | Cubique C2 et C1 biphasé | Cubique C1 | Cubique C1 |
| Paramètre de maille (Å) [1] | ~ 5,43 | mixte | mixte | ~ 10,86 | ~ 10,85 |
| Degré d'oxydation de l'uranium | +4/+5 | +4/+5 | +4/+5 | +4/+5 | +4/+5 |
| Etat | solide | solide | solide | solide | solide |
| [1] obtenu par analyse DRX | | | | | |

## EXEMPLE 2

### *Préparation d'une pastille de combustible selon l'invention par pressage des poudres*

#### *(i) Poudre de matériau selon l'invention*

Une poudre de matériau selon l'invention est préparée, comme décrit en exemple 1, par frittage d'un mélange d'$UO_2$ et de $Gd_2O_3$, dans un ratio massique $Gd_2O_3$/($UO_2+Gd_2O_3$) de 80 %, à 1 700 °C et sous atmosphère réductrice d'Ar, $H_2$ 5 % pendant 4 heures.

#### *(ii) Préparation de la pastille hétérogène*

Une pastille est moulée selon la structure présentée en figure 1 avec une partie intérieure cylindrique formée à partir d'une poudre d'oxyde d'uranium et une partie extérieure annulaire formée à partir de la poudre enrichie en Gd obtenue précédemment. Afin de distribuer les poudres selon la figure 1, il est possible d'utiliser une fine cloison, faite avec deux couronnes concentriques. Le remplissage fini, la fine cloison est retirée et le pressage opéré.

Le coeur cylindrique présente un rayon ($R_1$) d'environ 4 mm ; la partie extérieure annulaire présente une épaisseur (e) d'environ 50 à 250 $\mu$m en fonction de l'apport d'anti-réactivité désiré.

La pastille est ensuite frittée sous conditions réductrices avec une atmosphère d'Ar $H_2$ 5 % pendant 4 heures.

## EXEMPLE 3

### *Préparation d'une pastille de combustible selon l'invention par dépôt d'une couche formée d'une poudre à forte teneur en Gd*

#### *(i) Poudre de matériau*

Deux possibilités sont retenues :

A - Une poudre de matériau selon l'invention est préparée, comme décrit en exemple 1, par frittage d'un mélange d'$UO_2$ (voire de l'$U_3O_8$) et de $Gd_2O_3$, dans un ratio massique $Gd_2O_3$/($UO_2+Gd_2O_3$) de 80 %.

B - Une poudre est préparée, par mélange d'$UO_2$ (voire de l'$U_3O_8$) et de $Gd_2O_3$, dans un ratio massique $Gd_2O_3$/($UO_2+Gd_2O_3$) de 80 %.

#### *(ii) Préparation de la pastille hétérogène*

Une pastille constituée de matériaux fissiles (1) est mise en forme par compaction avec une géométrie cylindrique.

Afin de donner cohésion à la poudre, un pré-frittage de cette pastille peut être réalisé.

Une partie extérieure annulaire formée à partir de la poudre enrichie en gadolinium, obtenue à l'étape (i) selon le mode A- ou le mode B-, est déposée, par exemple sous forme de barbotine (formée à partir de la poudre et de l'éthanol), sur la surface cylindrique, puis la barbotine est séchée.

La pastille est ensuite frittée sous conditions réductrices avec une atmosphère d'Ar H$_2$ 5 % (molaire) pendant 4 heures.

Le coeur cylindrique, avec des éléments fissiles/fertiles, présente un rayon d'environ 4 mm ; la partie extérieure annulaire, avec le gadolinium, présente une épaisseur d'environ 30 à 250 μm en fonction de l'apport d'anti-réactivité désiré.

La figure 2 montre la pastille observée en coupe par microscopie optique.

## EXEMPLE 4

### *Utilisation d'un matériau selon l'invention comme poison consommable dans des réacteurs nucléaires pour l'apport d'anti-réactivité et/ou pour la réduction/suppression des besoins en bore et autres poisons/absorbants neutroniques*

La performance neutronique de différents assemblages 17x17 de combustible nucléaire est modélisée à l'aide du code de calcul APOLLO2.

*i. Principes et définitions des notions utilisées*

- **$K_{infini}$** : facteur de multiplication des neutrons en milieu infini (sans prendre en compte les fuites) ;
- **$K_{réel}$** : facteur de multiplication des neutrons en milieu fini (dit réel).

La différence entre $K_{infini}$ et $K_{réel}$ est donc liée à la quantité de neutrons qui s'échappent du réacteur, sans se multiplier, autrement dit :

$$K_{\text{inf}ini} = K_{réel} \times facteur_{géométrique} \qquad (Eq.\ 1)$$

le *facteur$_{géométrique}$* dépendant principalement de la géométrie du coeur, mais aussi de la nature des matériaux.

- La **réactivité** ρ**,** exprimée en pcm (pour cent mille), est une autre façon d'exprimer le facteur de multiplication (infini ou réel), mathématiquement,

$$\rho = \frac{K-1}{K} \times 1 \cdot 10^{5} \qquad (Eq.\ 2)$$

Ainsi l'équation 1 peut s'exprimer comme :

$$\rho_{inf} = \rho_{réel} + \rho_{fuites} \qquad (Eq.\ 3)$$

- **Réacteur critique**
  Un réacteur dit « critique » est un réacteur dans lequel la population de neutrons est constante, et différente de zéro (sans tenir compte des sources externes), autrement dit un réacteur pour lequel K$_{réel}$ = 1,00, ou exprimé en termes de réactivité, en employant l'équation 2, ρ = 0 pcm.

  Les calculs réalisés avec le code de calcul mentionné ci-dessus, nous donnent le $K_{infini}$. Il se trouve que pour le réacteur fictif, le terme $\rho_{fuites}$ est d'environ -2 500 pcm.

  Ainsi, un réacteur « critique » au sens des modélisations effectuées, présente : $\rho_{réel}$ = 0 pcm et $\rho_{infini}$ = 2 500 pcm ; ce qui se traduit, en facteur de multiplication, par : $K_{réel}$ = 1,00 et $K_{infini}$ = 1,025 (courbe 7 sur la figure 4).

- A titre d'exemple, la figure 4 représente l'évolution du facteur de multiplication ($K_{infini}$) d'un réacteur fictif, pour un assemblage constitué de pastilles homogènes d'UO$_2$ enrichies à 4,9 % en U$^{235}$ , avec une gestion par ¼ (4 cycles de fonctionnement, autrement dit, à chaque cycle, un quart des assemblages [les plus utilisés] sont changés par des assemblages frais), modélisée à l'aide du code de calcul (courbe 1).

Elle est comparée à la réactivité du même réacteur utilisant du bore (courbe 5) comme poison neutronique (2 000 ppm de bore dilué dans l'eau du caloporteur). Dans le cas de l'utilisation du bore, le réacteur peut rester critique à partir du point de fonctionnement (6) par diminution de la concentration en bore dans le caloporteur (mode d'opération dit « en bore critique »).

*Facteur de multiplication d'un réacteur idéal*

La courbe 2 sur le graphe de la figure 4 représente l'évolution du facteur de multiplication infini d'un réacteur dit « idéal ». Ce coeur « idéal » est un réacteur sans pénalité neutronique, avec une sur-réactivité initiale de 2 000 pcm (donc avec un $K_{infini}$ = 1,050) et sans pénalité sur la longueur du cycle (point de fonctionnement (4)).
Ainsi, comme représenté en figure 4, un **réacteur « idéal »** au sens des modélisations effectuées, est un réacteur qui possède une réactivité réelle, $\rho_{réel}$, de +2 000 pcm jusqu'au point de fonctionnement (3). Cette sur-réactivité permet de manoeuvrer le réacteur (par exemple, pour monter en puissance).

*Facteur de multiplication d'un assemblage idéal*

La figure 5 présente l'évolution du facteur de multiplication en milieu infini, $K_{infini}$ en condition chaud (c'est-à-dire en considérant l'effet de la température), d'un assemblage combustible à base d'$UO_2$ fictif en fonction du taux de combustion moyen de l'assemblage, pour des assemblages 17x17.

La relation entre l'évolution du $K_{infini}$ d'un assemblage ($K_{assemblage}^{inf}$) avec l'évolution du $K_{infini}$ d'un réacteur ($K_{coeur}^{inf}$), avec une gestion de $N$ cycles est donnée par l'approximation ci-dessous ;

$$K_{coeur}^{inf}(x) = \frac{1}{N} \sum_{i=0}^{i=N-1} \left[ K_{assemblage}^{inf}\left( x + L_{cycle} \times i \right) \right] \qquad (Eq.\ 4)$$

avec :

   $x$, le taux de combustion des assemblages en 1er cycle,

   $N$, le nombre total de cycles que les assemblages sont utilisés dans le réacteur. $K_{coeur}^{inf}(x)$,

   Le $K_{infini}$ d'un réacteur, avec une gestion à N cycles, en fonction du taux de combustion, x,

   $K_{assemblage}^{inf}\left( x + L_{cycle} \times i \right)$, le $K_{infini}$ d'un assemblage, en fonction d'un taux combustion,

   $L_{cycle}$, la longueur d'un cycle (en unités de taux de combustion). Notamment, $L_{cycle}$ vérifie que

   $K_{coeur}^{inf}\left( L_{cycle} \right) = 1,025$, afin de que le réacteur soit critique à la fin du cycle.

En employant l'équation 4, il possible de tracer (figure 6) l'évolution du $K_{infini}$ d'un **assemblage dit « idéal »** et d'un **assemblage dit « critique »,** de sorte qu'employés dans un réacteur (avec une gestion par quart, donc $N$ = 4), ils donnent respectivement un comportement de « réacteur idéal » et de « réacteur critique », comme défini précédemment.

*ii. Effet neutronique obtenu pour différents assemblages*

La figure 7.a présente l'évolution du $K_{infini}$ pour divers assemblages 17x17 :

- assemblage combustible à base d'$UO_2$ fictif (courbe 1) ;
- des assemblages employant 40 ou 52 crayons formés de pastilles hétérogènes conformes à l'invention et dont l'enrobage annulaire présente une épaisseur de 50, 60 ou 150 μm et divers vecteurs isotopiques de Gd. Les autres crayons de l'assemblage sont formés de pastilles homogènes d'$UO_2$ enrichies à 4,9 % en $U^{235}$ (courbes 2 à 5) ; et
- assemblages « idéal » et « critique » comme définis au point i. précédent (courbes 6 et 7).

L'ensemble de ces courbes considère un réacteur fictif sans bore, c'est-à-dire une concentration de 0,0 ppm de bore dans le caloporteur/modérateur.
A des fins de comparaison, la figure 7.b présente l'effet neutronique obtenu pour des assemblages intégrant des crayons de pastilles homogènes classiques constituées d'une solution solide de (U,Gd)O$_2$ à 8 % en poids de Gd$_2$O$_3$.

Il ressort de la figure 7.a qu'il est possible, en ajustant le nombre de crayons conformes à l'invention, l'épaisseur de la couche de poison consommable des pastilles les constituant et le vecteur isotopique du gadolinium, de contrôler l'évolution de la réactivité du réacteur de manière à s'approcher d'une évolution optimale.

Egalement, la comparaison des figures 7.a et 7.b montre que l'évolution de la réactivité de l'assemblage peut être mieux contrôlée avec des pastilles conformes à l'invention qu'avec des pastilles homogènes classiques, puisque la courbe de réactivité pour un assemblage selon l'invention s'approche davantage de la courbe dite « idéale » en fin de cycle.

iii. _Réactivité du réacteur_

Le comportement d'un réacteur employant les assemblages de l'invention est montré sur la figure 8.

Il ressort de la figure 8, que l'effet sur la réactivité permet de réduire, voire supprimer, l'usage de bore dans le réacteur.

Références

[1] Thèse de Balestrieri, 1995;

[2] Tang et al., Order-to-disorder phase transformation in ion irradiated uranium-bearing delta-phase oxides RE6U1O12 (RE=Y, Gd, Ho, Yb, and Lu), Journal of Solid State Chemistry, 183(4), 844-848 ;

[3] Tang et al., Microstructural évolution in irradiated uranium-bearing delta-phase oxides A6U1O12 (A=Y, Gd, Ho, Yb, and Lu), Journal of Nuclear Materials, 407(1), 44-47.

**Revendications**

1. Matériau à base d'uranium (U), de gadolinium (Gd) et d'oxygène (O) présentant une phase cristalline de structure cristallographique de type cubique, avec un rapport atomique Gd/[Gd+U] compris entre 0,6 et 0,93, l'uranium y étant présent au degré d'oxydation +IV et/ou +V.

2. Matériau selon la revendication 1, présentant une phase cristalline, dite phase cubique 1, dont le rapport atomique Gd/[Gd+U] est compris entre 0,79 et 0,93, la structure cristallographique de type cubique présentant de préférence un paramètre de maille ($a_1$) compris entre 10,8 et 10,9 Å.

3. Matériau selon la revendication 1, présentant une phase cristalline, dite phase cubique 2, dont le rapport atomique Gd/[Gd+U] est compris entre 0,6 et 0,71, la structure cristallographique de type cubique présentant de préférence un paramètre de maille ($a_2$) compris entre 5,3 et 5,5 Å.

4. Matériau selon la revendication 1 de type biphasé, présentant une phase cubique 1 telle que définie selon la revendication 2 et une phase cubique 2 telle que définie selon la revendication 3.

5. Matériau selon l'une quelconque des revendications précédentes, dans lequel l'uranium est de l'uranium isotopiquement enrichi en U$^{235}$, de l'uranium isotopiquement appauvri en U$^{235}$ ou de l'uranium naturel, et/ou le gadolinium est du gadolinium naturel ou du gadolinium isotopiquement modifié dans son rapport $^{155}$Gd/Gd$_{total}$ et/ou $^{157}$Gd/Gd$_{total}$.

6. Procédé de préparation d'un matériau défini selon l'une quelconque des revendications 1 à 5, comprenant une étape de frittage à une température allant de 1 200 à 2 200 °C et sous atmosphère réductrice, d'une poudre formée d'un mélange d'oxyde d'uranium tel que UO$_2$ ou un oxyde supérieur tel que U$_3$O$_8$, et d'oxyde de gadolinium Gd$_2$O$_3$, dans des proportions telles que le gadolinium est présent dans un rapport atomique Gd/[Gd+U] allant de 0,6 à 0,93.

7. Procédé selon la revendication précédente, dans lequel le frittage est opéré sous atmosphère d'argon additionnée à 5 % molaire en hydrogène, et/ou pendant une durée supérieure ou égale à 1 heure, en particulier allant de 3 à 8 heures.

8. Utilisation d'un matériau tel que défini selon l'une quelconque des revendications 1 à 5, comme poison neutronique consommable d'un élément combustible nucléaire.

9. Pastille de combustible nucléaire, comprenant un matériau tel que défini selon l'une quelconque des revendications 1 à 5.

10. Pastille selon la revendication précédente, ladite pastille étant une pastille hétérogène (10), formée d'au moins une partie intérieure, en particulier cylindrique (1), comprenant au moins une matière fissile, voire fertile, enrobée d'une partie extérieure annulaire (2) formée en tout ou partie d'un matériau tel que défini selon l'une quelconque des revendications 1 à 5.

11. Pastille selon la revendication 10, dans laquelle ladite partie extérieure annulaire (2) présente une épaisseur (e) allant de 0,05 à 7,5 % du rayon (R) de ladite pastille, et/ou ladite partie intérieure cylindrique (1) est formée en tout ou partie d'oxyde d'uranium, d'oxyde de plutonium, d'oxyde de thorium ou leurs mélanges, en particulier est formée d'oxyde d'uranium.

12. Procédé de fabrication d'une pastille de combustible nucléaire définie selon l'une quelconque des revendications 10 et 11, comprenant au moins les étapes consistant en :

(i) disposer d'une poudre comprenant un matériau tel que défini selon l'une quelconque des revendications 1 à 5 ; ou d'une poudre formée d'un mélange d'oxyde d'uranium tel que $UO_2$ ou un oxyde supérieur tel que $U_3O_8$ et d'oxyde de gadolinium $Gd_2O_3$, dans des proportions telles que le gadolinium est présent dans un rapport atomique Gd/[Gd+U] allant de 0,6 à 0,93;
(ii) faire une barbotine à partir de la poudre de l'étape (i) ;
(iii) déposer la poudre sous forme de barbotine sur la surface d'une pastille, de préférence pressée, comprenant au moins une matière fissile, voire fertile ; et
(iv) fritter la pastille obtenue à l'issue de l'étape (iii) sous atmosphère réductrice et à une température comprise entre 1 200 °C et 2 200 °C,

l'étape (iii) incluant de préférence le séchage de la couche de barbotine déposée en surface de la pastille.

13. Crayon de combustible nucléaire comprenant des pastilles de combustible telles que définies selon l'une quelconque des revendications 9 à 11.

14. Assemblage de combustible nucléaire, comprenant des crayons de combustible tels que définis en revendication 13.

15. Elément combustible nucléaire de géométrie type plaques, comprenant une ou plusieurs zones fissiles, voire fertiles, revêtue(s), au moins en partie, d'un matériau tel que défini selon l'une quelconque des revendications 1 à 5.


**Patentansprüche**

1. Material auf der Basis von Uran (U), Gadolinium (Gd) und Sauerstoff (O), mit einer kristallinen Phase mit kubischem Kristallgitter, mit einem Atomverhältnis Gd/[Gd+U] zwischen 0,6 und 0,93, bei dem das Uran im Oxidationsgrad +IV und/oder +V vorliegt.

2. Material nach Anspruch 1, mit einer als kubische Phase 1 bezeichneten kristallinien Phase, in der das Atomverhältnis Gd/[Gd+U] zwischen 0,79 und 0,93 beträgt, wobei das kubische Kristallgitter vorzugsweise einen Gitterparameter ($a_1$) zwischen 10,8 und 10,9 Å hat.

3. Material nach Anspruch 1, mit einer als kubische Phase 2 bezeichneten kristallinen Phase, in der das Atomverhältnis Gd/[Gd+U] zwischen 0,6 und 0,71 beträgt, wobei das kubische Kristallgitter vorzugsweise einen Gitterparameter ($a_2$) zwischen 5,3 und 5,5 Å hat.

4. Material nach Anspruch 1, mit zwei Phasen, das eine kubische Phase 1 aufweist, wie sie in Anspruch 2 definiert ist und eine kubische Phase 2, wie sie in Anspruch 3 definiert ist.

5. Material nach einem der vorstehenden Ansprüche, bei der das Uran ein mit dem Isotop $U^{235}$ angereichertes Uran, ein mit dem Isotop $U^{235}$ abgereichertes Uran oder Natururan ist und/oder das Gadolinium Naturgadolinium oder ein Gadolinium ist, das in seinem Isotopenverhältnis $^{155}Gd/Gd_{gesamt}$ und/oder $^{157}Gd/Gd_{gesamt}$ modifiziert ist.

6. Verfahren zur Herstellung eines Materials nach einem der Ansprüche 1 bis 5, mit einem Schritt des Sinterns, bei einer Temperatur von 1200 bis 2200 °C und in reduzierender Atmosphäre, eines Pulvers, das gebildet ist aus einem Gemisch aus Uranoxid wie etwa $UO_2$ oder einem höheren Oxid wie etwa $U_3O_8$, und Gadoliniumoxid $Gd_2O_3$, in Verhältnissen, in denen das Gadolinium in einem Atomverhältnis Gd/[Gd+U] zwischen 0,6 und 0,93 vorliegt.

7. Verfahren nach dem vorstehenden Anspruch, bei dem das Sintern in einer Atmosphäre aus Argon mit einem Zusatz von 5 Mol-% Wasserstoff und/oder während einer Dauer ausgeführt wird, die größer oder gleich 1 Stunde, insbesondere 3 bis 8 Stunden ist.

8. Verwendung eines Materials nach einem der Ansprüche 1 bis 5 als konsumierbares Neutronengift in einem Kernbrennstoffelement.

9. Kernbrennstoffpastille mit einem Material nach einem der Ansprüche 1 bis 5.

10. Pastille nach dem vorstehenden Anspruch, welche Pastille eine heterogene Pastille (10) ist, gebildet aus mindestens einem inneren, insbesondere zylindrischen Teil (1), der wenigstens ein spaltbares oder ergiebiges Material aufweist, umhüllt von einem ringförmigen äußeren Teil (2), der ganz oder zum Teil aus einem Material gemäß einem der Ansprüche 1 bis 5 gebildet ist.

11. Pastille nach Anspruch 10, bei der der genannte ringförmige äußere Teil (2) eine Dicke (e) von 0,05 bis 7,5 % des Radius (R) der genannten Pastille hat und/oder der genannte zylindrische innere Teil (1) ganz oder zum Teil aus Uranoxid, Plutoniumoxid, Thoriumoxid oder Gemischen hieraus, insbesondere aus Uranoxid gebildet ist.

12. Verfahren zur Herstellung einer Kernbrennstoffpastille nach einem der Ansprüche 10 und 11, mit wenigstens den Schritten, die bestehen in:

(i) Bereitstellen eines Pulvers, das ein Material enthält, wie es in einem der Ansprüche 1 bis 5 definiert ist, oder eines Pulvers, das aus einer Mischung aus Uranoxid wie etwa $UO_2$ oder einem höheren Oxid wie etwa $U_3O_8$ und Gadoliniumoxid $Gd_2O_3$ gebildet ist, in solchen Verhältnissen, dass das Gadolinium in einem Atomverhältnis Gd/[Gd+U] von 0,6 bis 0,93 vorliegt,
(ii) Herstellen eines Schlammes aus dem Pulver aus Schritt (i),
(iii) Auftragen des Pulvers in der Form des Schlammes auf die Oberfläche einer Pastille, vorzugsweise einer gepressten Pastille, die wenigstens ein spaltbares oder ergiebiges Material enthält, und
(iv) Sintern der am Ende des Schrittes (iii) erhaltenen Pastille unter reduzierender Atmosphäre bei einer Temperatur zwischen 1200 °C und 2200 °C,

wobei der Schritt (iii) vorzugsweise das Trocknen der auf die Oberfläche der Pastille aufgetragenen Schlammschicht einschließt.

13. Kernbrennstoffstab mit Brennstoffpastillen, wie sie in einem der Ansprüche 9 bis 11 definiert sind.

14. Kernbrennstoffbaugruppe mit Brennstoffstäben, wie sie in Anspruch 13 definiert sind.

15. Kernbrennstoffelement mit plattenförmiger Geometrie, mit einer oder mehreren spaltbaren oder ergiebigen Zonen, die zumindest zum Teil mit einem Material nach einem der Ansprüche 1 bis 5 umhüllt ist/sind.

**Claims**

1. A material based on uranium (U), gadolinium (Gd) and oxygen (O) exhibiting a crystalline phase with a crystallographic structure of cubic type, with a Gd/[Gd+U] atomic ratio between 0.6 and 0.93, the uranium being present therein in the +IV and/or +V oxidation state.

2. The material as claimed in claim 1, exhibiting a crystalline phase referred to as cubic 1 phase, the Gd/[Gd+U] atomic ratio of which is between 0.79 and 0.93, the crystallographic structure of cubic type exhibiting peferably a unit cell parameter ($a_1$) between 10.8 and 10.9 Å.

3. The material as claimed in claim 1, exhibiting a crystalline phase referred to as cubic 2 phase, the Gd/[Gd+U] atomic ratio of which is between 0.6 and 0.71, the crystallographic structure of cubic type exhibiting preferably a unit cell parameter ($a_2$) between 5.3 and 5.5 Å.

4. The material as claimed in claim 1 of two-phase type, exhibiting a cubic 1 phase as defined according to claim 2 and a cubic 2 phase as defined according to claim 3.

5. The material as claimed in any one of the preceding claims, in which the uranium is uranium isotopically enriched in $^{235}U$, uranium isotopically depleted in $^{235}U$ or natural uranium, and/or the gadolinium is natural gadolinium iso-topically modified in its $^{155}Gd/Gd_{total}$ and/or $^{157}Gd/Gd_{total}$ ratio.

6. A process for the preparation of a material defined according to any one of claims 1 to 5, comprising a stage of sintering, at a temperature ranging from 1200 to 2200 °C and under reducing atmosphere, a powder formed of a mixture of uranium oxide, such as $UO_2$ or a higher oxide, such as $U_3O_8$, and gadolinium oxide $Gd_2O_3$ in proportions such that the gadolinium is present in a Gd/[Gd+U] atomic ratio ranging from 0.6 to 0.93.

7. The process as claimed in the preceding claim, in which the sintering is carried out under an argon atmosphere to which 5 mol% of hydrogen has been added, and/or for a period of time of greater than or equal to 1 hour, in particular ranging from 3 to 8 hours.

8. The use of a material as defined according to any one of claims 1 to 5 as burnable neutron poison of a nuclear fuel element.

9. A nuclear fuel pellet, comprising a material as defined according to any one of claims 1 to 5.

10. The pellet as claimed in the preceding claim, said pellet being a heterogeneous pellet (10), formed of at least an internal part, in particular cylindrical (1), comprising at least one fissile, indeed even fertile, material, coated with an annular external part (2) formed in all or part of a material as defined according to any one of claims 1 to 5.

11. The pellet as claimed in claim 10, in which said annular external part (2) exhibits a thickness (e) ranging from 0.05 to 7.5% of the radius (R) of said pellet, and/or said cylindrical internal part (1) is formed in all or part of uranium oxide, plutonium oxide, thorium oxide or their mixtures and in particular is formed of uranium oxide.

12. A process for the manufacture of a nuclear fuel pellet defined according to any one of claims 10 and 11, comprising at least the stages consisting in:

(i) having available a powder comprising a material as defined according to any one of claims 1 to 5; or having available a powder formed of a mixture of uranium oxide, such as $UO_2$ or a higher oxide, such as $U_3O_8$, and gadolinium oxide $Gd_2O_3$ in proportions such that the gadolinium is present in a Gd/[Gd+U] atomic ratio ranging from 0.6 to 0.93;
(ii) preparing a slip from the powder of stage (i);
(iii) depositing the powder in the slip form on the surface of a pellet, preferably a pressed pellet, comprising at least one fissile, indeed even fertile, material; and
(iv) sintering the pellet obtained on conclusion of stage (iii) under a reducing atmosphere and at a temperature between 1200°C and 2200°C,

stage (iii) including preferably the drying of the slip layer deposited at the surface of the pellet.

13. A nuclear fuel rod comprising fuel pellets as defined according to any one of claims 9 to 11.

14. A nuclear fuel assembly comprising fuel rods as defined in claim 13.

15. A nuclear fuel element of plate-type geometry comprising one or more fissile, indeed even fertile, regions covered, at least in part, with a material as defined according to any one of claims 1 to 5.

FIGURE 1

FIGURE 2

Légende

| | |
|---|---|
| U | Crayons UO2 |
| GD | Crayons avec pastilles selon l'invention |
| | Tube guide |

A-A'

**FIGURE 3**

FIGURE 4

FIGURE 5

**FIGURE 6**

Figure 7.a.

Figure 7.b.

FIGURE 7

**FIGURE 8**

Figure 9.a

Figure 9.b

Figure 9.c

FIGURE 9

Figure 10.a

Figure 10.b

FIGURE 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2789404
- FR 2536571
- US 4671927 A
- US 4587087 A
- US 3122484 A
- US 4668468 A
- US 4678629 A
- FR 2953637
- FR 2889765

**Littérature non-brevet citée dans la description**

- *Thèse de Balestrieri,* 1995
- **TANG et al.** Order-to-disorder phase transformation in ion irradiated uranium-bearing delta-phase oxides RE6U1O12 (RE=Y, Gd, Ho, Yb, and Lu). *Journal of Solid State Chemistry,* vol. 183 (4), 844-848
- **TANG et al.** Microstructural évolution in irradiated uranium-bearing delta-phase oxides A6U1O12 (A=Y, Gd, Ho, Yb, and Lu). *Journal of Nuclear Materials,* vol. 407 (1), 44-47